(19) Europäisches Patentamt

European Patent Office

Office européen des brevets

(11) **EP 0 982 067 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.⁷: **B01D 71/02**, C01B 39/30, B01D 61/36, B01D 53/22

(21) Anmeldenummer: **99113653.2**

(22) Anmeldetag: **14.07.1999**

(54) **Membran zur Trennung von Fluiden**

Fluid separation membrane

Membrane de séparation de fluides

(84) Benannte Vertragsstaaten:
**BE DE FR GB IT**

(30) Priorität: **27.07.1998 JP 21073098**

(43) Veröffentlichungstag der Anmeldung:
**01.03.2000 Patentblatt 2000/09**

(73) Patentinhaber:
• **Bayer Technology Services GmbH**
  **51368 Leverkusen (DE)**
• **MITSUI ZOSEN Kabushiki Kaisha**
  **Tokyo (JP)**
  Benannte Vertragsstaaten:
  **DE FR GB IT**

(72) Erfinder:
• **Eltner, Ansgar, Dr.**
  **51061 Köln (DE)**
• **Göbbel, Hans-Georg**
  **50733 Köln (DE)**
• **Nickel, Andreas**
  **58300 Wetter (DE)**
• **Puppe, Lothar, Dr.**
  **51399 Burscheid (DE)**
• **Kondo, Masakazu**
  **Ichihara, Chiba (JP)**
• **Morigami, Yoshio**
  **Tamano, Okayama (JP)**
• **Okamoto, Kenichi**
  **Ube, Yamaguchi (JP)**
• **Kita, Hidetoshi**
  **Ube, Yamaguchi (JP)**

(56) Entgegenhaltungen:
EP-A- 0 659 469      FR-A- 2 719 238
US-A- 4 699 892      US-A- 5 019 263

• **PATENT ABSTRACTS OF JAPAN vol. 1997, no. 02, 28. Februar 1997 (1997-02-28) & JP 08 257301 A (MITSUI ENG &AMP;SHIPBUILD CO LTD), 8. Oktober 1996 (1996-10-08) -& DATABASE WPI Section Ch, Derwent Publications Ltd., London, GB; Class E33, AN 1996-500809 XP002121061 -& CHEMICAL ABSTRACTS, vol. 126, no. 3, 20. Januar 1997 (1997-01-20) Columbus, Ohio, US; abstract no. 33856, XP002121059**
• **PATENT ABSTRACTS OF JAPAN vol. 1997, no. 02, 28. Februar 1997 (1997-02-28) & JP 08 257302 A (MITSUI ENG &AMP;SHIPBUILD CO LTD), 8. Oktober 1996 (1996-10-08) -& DATABASE WPI Section Ch, Derwent Publications Ltd., London, GB; Class D15, AN 1996-500810 XP002121062 -& CHEMICAL ABSTRACTS, vol. 126, no. 3, 20. Januar 1997 (1997-01-20) Columbus, Ohio, US; abstract no. 33857, XP002121060**

**Beschreibung**

Die Erfindung betrifft eine Membran zur Trennung von Fluiden, bestehend wenigstens aus einem porösen Träger und einer auf den Träger aufgebrachten Zeolithfibry, wobei der Zeolith ein Zeolith des T-Typs oder eines Erionit-Typs ist.

In den letzten Jahren ist die Trennung organischer und wäßriger Phasen ein Schwerpunkt der Entwicklung und Anwendung von Membranen und Membranprozessen. Ein bedeutendes Anwendungsgebiet stellt z.B. die Trennung azeotroper bzw. engsiedender Gemische mit der Pervaporation oder Dampfpermeation dar. Dabei wird das zu trennende Gemisch (Feed) der Membran in flüssiger (Pervaporation) oder dampfförmiger (Dampfpermeation) Form zugeführt. An der Membran findet eine Auftrennung des Gemisches in zwei Ströme statt: in das Permeat, das über die Membran abgetrennt wird und eine wesentlich höhere Wasserkonzentration als der Feedstrom aufweist, und in das Retentat, dessen Wasseranteil niedriger als der des Ausgangsgemisches ist.

Am weitesten entwickelt für diese Anwendungen sind heute organische, dichte Polymermembranen, z.B. Polyvinylalkoholmembranen, beschrieben in der Patentschrift US 2 953 502, die zur Trennung azeotroper Alkohol/Wasser-Gemische eingesetzt werden. Diese organischen Membranen sind hinsichtlich ihrer Selektivität beschränkt. Ein Methanol/Wasser-Gemisch z.B. ist mit organischen Membranen nur mit hohem Aufwand trennbar, so daß sich gegenüber einer Destillation keine Vorteile ergeben. Darüber hinaus besitzen die organischen Membranen keine ausreichende thermische und chemische Stabilität. Eine typische Temperaturbeständigkeit bis maximal 100°C und die nur bedingte Lösungsmittelbeständigkeit (z.B. gegenüber DMF, Acetonitril) schränken die Einsatzgebiete für organischen Membranen deutlich ein.

Gegenstand neuerer Entwicklungen sind anorganische Membranen, die eine vergleichbare oder bessere Selektivität bieten, als die organischen, dichten Membranen. In den Patentschriften US 5 258 339 und US 4 699 892 wird die Herstellung einer Verbundmembran, bestehend aus einer nicht näher bezeichneten trennenden Zeolithschicht und einer porösen anorganischen Stützschicht beschrieben. Detaillierter beschreibt die Offenlegungsschrift EP 0 659 469 den Aufbau einer Membran, bestehend aus einer trennenden Zeolithschicht des NaA-Typs und einem porösen Träger zur Trennung von flüssigen Gemischen wie z.B. Alkohol/Wasser-Mischungen.

Ein Einsatz dieser Membranen zur Trennung saurer organisch/wäßriger Gemische, wie sie in der Industrie, insbesondere in Reaktionsansätzen, häufig vorkommen, ist aufgrund der pH-Instabilität der aufgebrachten NaA-Zeolithschicht nicht möglich. In Kontakt mit wäßrigen Lösungen niedrigen pH-Werts lösen sich die Zeolithschichten innerhalb kürzester Zeit auf, d.h. die aktive Schicht der Membran wird zerstört, so daß mittels dieser Membranen eine selektive Abtrennung des Wassers aus sauren, organisch/wäßrigen Gemischen nicht möglich ist. Gleiches gilt für eine Zeolithschicht des Typs NaY, wie in der Schrift JP 08257301 beschrieben.

In der Offenlegungsschrift JP 08257302 wird eine resistente anorganische Zeolithmembran beschrieben, deren trennende Schicht aus einem ZSM5-Typ Zeolith besteht. Dieser Zeolith ist säurestabil aber hydrophob und trennt somit bevorzugt hydrophobe Stoffe ab. Er zeigt keine ausgeprägte Wasserpermeabilität. Eine Membran mit einer Schicht aus einem ZSM-5-Zeolith ist deshalb für die Abtrennung von Wasser aus wäßrig/organischen Systemen nicht geeignet.

Einen anderen Aufbau einer Verbundmembran bestehend aus Zeolithen und anorganischem Träger zeigt die Schrift FR 2 719 238. Als Zeolithmaterial wird u.a. Erionit erwähnt. Hierbei werden mit dem Zeolith nur die großen Poren des Trägermaterials aufgefüllt, so daß die Trennung an den innerhalb der großen Poren des Trägermaterials befindlichen Zeolithkristallen erfolgt. Bei diesem Aufbau ist eine fehlstellenfreie, d.h. dichte Herstellung, schwierig, und nur dann zu erreichen, wenn der Zeolith tief in die Poren des Trägermaterials eindringt. Die so erzeugten großen Zeolithdicken weisen einen großen Stofftransportwiderstand und damit nur geringe Permeatflüsse auf. Eine Anwendung solcher Membranen ist daher vergleichsweise ineffektiv.

US 5 019 263 A beschreibt eine nicht-Kompositmembran d.h.eine trägerfreie Membran, die nur aus Zeolith besteht. Als Zeolithmaterial wird u.a. Erionit erwähnt.

Aufgabe der Erfindung ist es, eine Membran bereitzustellen, die die Nachteile der bekannten Membranen nicht aufweist, zur Trennung organisch/wäßriger Gemische, insbesondere saurer Phasen, geeignet ist, eine hohe Selektivität und einen hinreichenden Permeatfluß ermöglicht und möglichst bei hinreichender Temperaturstabilität eine lange Standzeit aufweist.

Die Aufgabe wird erfindungsgemäß gelöst durch eine Membran, aus einem porösen Trägerkörper mit einem damit verbundenen Film aus einem Zeolith des T-Typs oder eines Erionit-Typs, mit einer hohen Selektivität und hohem Permeatfluß bei gleichzeitig hoher Säurebeständigkeit, der zur Trennung saurer, organisch/wäßriger Gemische, wie sie in der Industrie, insbesondere in Kombination mit chemischen Reaktionen häufig vorkommen, mittels Pervaporation, Dampfpermeation und Gaspermeation geeignet ist.

Gegenstand der Erfindung ist eine Membran zur Trennung von Fluiden, bestehend wenigstens aus einem porösen Träger und einer auf den Träger aufgebrachten Zeolithfibry, wobei der Zeolith ein Zeolith des T-Typs oder eines Erionit-Typs ist.

Die erfindungsgemäße Membran besteht aus einem porösen Trägermaterial und einem darauf aufgebrachten Zeolith, der eine fehlstellenfreie, dichte Schicht formt. Der aufgebrachte Zeolith ist ein Zeolith des T-Typs oder des Erionit-Typs. Dieser Zeolith weist gegenüber Säuren und organischen Lösungsmitteln eine hohe Stabilität auf. Gleichzeitig ermöglicht er aufgrund seiner hydrophilen Eigenschaften und der engen Poren in Form eines Achtringes (Porendurchmesser typischerweise 3,6 x 5,1 Å) die selektive Abtrennung von Wasser aus Gemischen. Diese Membran vermeidet die obengenannten Nachteile bekannter Membranen und eignet sich insbesondere hervorragend zur Trennung von Wasser aus sauren organisch/wäßrigen Gemischen.

Es wurde gefunden, daß speziell ein Zeolith des T-Typs oder des Erionit-Typs diese Eigenschaften aufweist und deshalb für die Herstellung der Trennschicht besonders geeignet ist. Hergestellt werden kann die Membran in einem hydrothermalen Prozeß bei dem bei niedrigen Temperaturen die Zeolithschicht direkt auf den Träger kristallisiert wird.

Als Erionit wird die natürlich vorkommende Variante des beschriebenen Zeolithen bezeichnet. Ein synthetisch hergestellter vergleichbarer Zeolith wird T-Typ Zeolith genannt, wobei der T-Typ Zeolith immer eine Mischung ist, die aus Erionit-(Molanteil: 0,5 - 0,95) und Offretit-Zeolith (Molanteil: 0,5 - 0,05) besteht.

Der geeignete poröse Träger kann aus Keramik oder einem Metalloxid, z.B. aus Aluminiumoxid, Siliciumdioxid, Zirkoniumoxid, Siliciumnitrid, Siliciumcarbid usw., oder aus Metall, z.B. Aluminium, Silber oder Edelstahl oder aus organischen Polymeren, Polypropylen, Polyethylen, Polytetrafluorethylen, Polysulfon und Polyimid, bestehen.

Der Träger hat bevorzugt einen mittleren Porendurchmesser von 0,05 µm - 10 µm, bevorzugt von 0,1 µm - 2 µm, und eine Porosität von 10 % bis 60 %, bevorzugt von 30 % bis 50 %. Unter Porosität bzw. Porositätsgrad wird das Verhältnis von Porenvolumen zum Gesamtvolumen des Trägerkörpers verstanden. Geringere Porendurchmesser als 0,05 µm sind aufgrund der zu geringen Permeatflüsse ungeeignet. Bei einer Porosität unterhalb von 10% wird der Permeatfluß ebenfalls stark eingeschränkt. Ist der Porenduchmesser größer als 10 µm kann die Selektivität vermindert sein. Eine Porosität oberhalb von 60 % führt ebenso zu einer geringeren Selektivität als auch zu einer geringeren Materialfestigkeit.

Ein besonders bevorzugter Träger für die Membran besteht aus Aluminiumoxid mit einem mittleren Durchmesser von 0,1 µm - 2 µm und einer Porosität von 30 % - 50 %, der 50 % bis 100 % $Al_2O_3$ enthält.

Der poröse Träger unterliegt in seiner äußeren Geometrie keinerlei Beschränkung. Eine für die Pervaporation und Dampfpermeation günstige Geometrie sind Rohre, 10-100 cm lang mit einem äußeren Durchmesser von mindestens 10 mm, einer Rohrdicke von mindestens 0,2 mm bis zu einigen Millimetern. Die Zeolithschicht kann auf der Innenfläche und/oder auf der Außenfläche des rohrförmigen Trägerkörpers aufgebracht sein, vorzugsweise auf der Außenfläche. Der poröse Körper kann ebenso ein zylinderförmiger Körper mit einem Außendurchmesser von 30 - 100 mm und einer Länge von 20 - 100 cm, der eine Vielzahl longitudinaler Kanäle mit Durchmessern von 2 - 12 mm aufweist, sein.

Auf diesem Trägermaterial wird ein T-Typ-Zeolith oder ein Erionit-Zeolith in einem hydrothermalen Verfahren synthetisiert, wobei Siliziumdioxidpulver, Natriumsilikat als Siliziumquellen, Natriumaluminat, Aluminiumhydrooxid, als Aluminiumquellen und Natrium- sowie Kaliumhydroxid als Kationenquellen verwendet werden. Eine spezifische Mischung bestehend aus den oben beschriebenen Ausgangssubstanzen wird in destilliertem Wasser suspendiert, gerührt und für eine bestimmte Zeit (1 - 48 Stunden) altern gelassen. Anschließend wird der Träger in diese Lösung getaucht und die Zeolithschicht mittels hydrothermaler Synthese unter bestimmten Bedingungen aufgebracht. Der poröse Träger enthält bevorzugt Keimkristalle mit einer mittleren Größe von kleiner als 50µm, bevorzugt Zeolithkristalle, deren mittlere Größe im Bereich 10 - 150µm liegt. Der Anteil der Keimkristalle auf dem porösen Träger beträgt 1-500 mg/cm$^2$, bevorzugt 10 - 60 mg/cm$^2$.

Neben den Hydrothermalverfahren sind zur Beschichtung des porösen Trägers auch weitere Verfahren, wie z.B. Abscheidung aus der Gasphase denkbar. Das Hydrothermalverfahren zur Herstellung der Zeolithschicht findet bei einer Temperatur im Bereich von 60 - 150°C, vorzugsweise 80 - 110°C, und einer Dauer von 1 - 48 Stunden, bevorzugt 20 - 24 Stunden, mit anschließendem Waschen für eine Dauer von 6 - 24 Stunden und daran wiederum anschließendem Trocknen statt.

Eine besonders bevorzugte Membran ist dadurch gekennzeichnet, daß der Zeolith-Film des T-Typs oder Erionit-Typs eine fehlstellenfreie und rißfreie Schicht auf dem Trägermaterial bildet.

Der Zeolith-Film des T-Typs oder Erionit-Typs ist insbesondere auf dem Träger durch hydrothermale Abscheidung aus den Ausgangsverbindungen mit folgenden Molverhältnissen gebildet:

| | |
|---|---|
| $SiO_2/Al_2O_3$ | von 30 bis 150, |
| $OH^-/SiO_2$ | von 0,1 bis 1, |
| $Na^+/(Na^++K^+)$ | von 0,1 bis 1, |
| $H_2O/(Na^++K^+)$ | von 10 bis 50. |

Der Zeolith-Film des T-Typs oder Erionit-Typs weist bevorzugt eine Schichtdicke von 3 bis 100 μm, insbesondere bevorzugt von 10 bis 50 μm auf.

Ist der Zeolith-Film des T-Typs oder Erionit-Typs auf beiden Seiten eines insbesondere rohrförmigen, porösen Trägers aufgebaut, beträgt die Dicke des Zeolith-Films insbesondere von 10 - 50 μm, und die Gesamtdicke der Membran von 1 bis 3 mm einschließlich des Trägermaterials.

Weiterer Gegenstand der Erfindung ist die Verwendung einer erfindungsgemäßen Membran zur Trennung von Fluiden, insbesondere von Fluiden organischer Verbindungen und Wasser oder gegebenenfalls Wasser enthaltender, organischer Mischungen mittels Pervaporation, Dampfpermeation oder Gaspermeation.

Besonders bevorzugt wird die erfindungsgemäße Membran zur Abtrennung von Wasser aus sauren (pH-Wert >7, bevorzugt >4) organisch/wäßrigen Mischungen mittels Pervaporation, Dampfpermeation oder Gaspermeation verwendet.

Die erfindungsgemäße Membran, kann zur selektiven Abtrennung von Wasser aus flüssigen oder dampfförmigen Mischungen, bestehend aus Alkoholen (z.B. Methanol, Ethanol, Propanol, etc.), Ketonen (z.B. Aceton, und Methyl-ethyl-keton, etc.) halogenierten Kohlenwasserstoffen (z.B. Tetrachlorkohlenstoff und Trichlorethylen, etc.), Gase z.B. $CO_2$ und $N_2$, oder allgemein wäßrigen, sauren Mischungen, die z.B. Salzsäure, Essigsäure oder Phenol enthalten können bzw. die aus zwei oder mehreren der obigen Komponenten bestehen, mittels Pervaporation und Dampfpermeation verwendet werden.

Die erfindungsgemäße Membran mit einer Beschichtung eines Zeolithen des T-Typs oder Erionit-Typs unterscheidet sich aufgrund ihrer Fähigkeit zur selektiven Abtrennung von Wasser aus organisch/wäßrigen Mischungen, insbesondere aus Mischungen mit sauren Komponenten, wie sie in der Industrie häufig vorkommen, mit hohem Permeatfluß, sowie in ihrer Langzeitbeständigkeit in sauren Medien von anderen heute zugänglichen, hydrophilen Membranen.

Aus diesem Grund ist ein Einsatz dieser Membranen in Membranreaktoren bei Anwesenheit saurer Komponenten zur gezielten Abtrennung eines Reaktionsprodukts, als energie- und platzsparende Kopplungsapparate der Reaktions- und der Membrantechnik möglich.

Die Erfindung wird nachstehend anhand der Figuren 1 bis 5 näher erläutert, ohne daß dadurch die Erfindung im Einzelnen eingeschränkt ist.

Es zeigen:

Fig. 1: den schematischen Aufbau einer Anlage zur Trennung von Ethanol und Wasser mit einer rohrförmigen erfindungsgemäßen Membran.

Fig. 2: Beugungsintensitätskurven von drei T-Typ-Membranen mit unterschiedlicher Beschichtung und einem unbeschichteten Träger.

Fig. 3: Beugungsintensitätskurven von vier T-Typ Zeolith Membranen mit unterschiedlicher Synthesezeit und von einem unbeschichteten Träger.

Fig. 4: Beugungsintensitätskurven von T-Typ-Membranen gleicher Synthesezusammensetzung, aber unterschiedlicher Synthesetemperatur sowie Membran hergestellt aus nicht gealterter Lösung.

Fig. 5: Für die Abtrennung von Waser aus Phenol bei einer Feedtemperatur von 80°C (Permeatdruck 10 bzw. 5 mbar) den Wasseranteil im Permeat bzw. den Wasserfluß $Q_{H2O}$ in Abhängigkeit von der Wasserkonzentration im Zulauf.

## Beispiele

### Beispiel 1 (Herstellung, Einfluß der Bedingungen):

Verschiedene Membranen wurden zur Vermessung und Charakterisierung hergestellt. Dazu wurden mehrere Parameter variiert, um den Einfluß der Zusammensetzung der Ausgangslösung, der Synthesezeit und der Synthesetemperatur darzustellen.

Kolloidales Siliziumoxid als Siliziumquelle, Natriumaluminat als Aluminiumquelle, Natrium- und Kaliumhydroxid als Kationenquelle und destilliertes Wasser wurden in folgenden Molverhältnissen gemischt:

| | |
|---|---|
| $SiO_2/Al_2O_3$ | von 30 bis 150, |
| $OH^-/SiO_2$ | 0,77 |
| $Na^+/(Na^++K^+)$ | 0,77 |
| $H_2O/(Na^++K^+)$ | 20,75 |

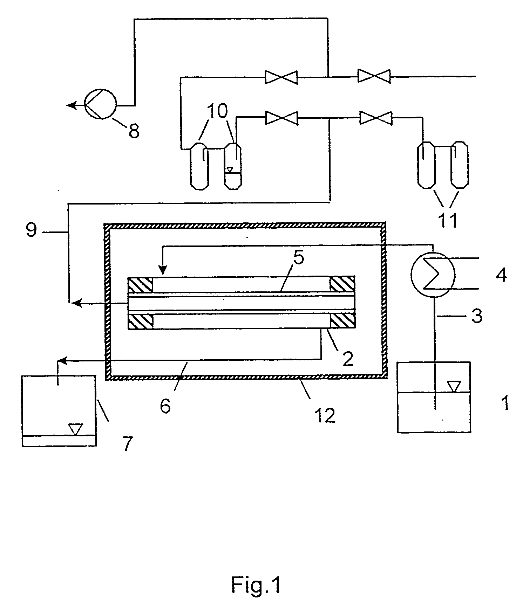

Die Lösung wurde zuerst gerührt und an Luft bei Raumtemperatur für 28-48 Stunden gealtert. Anschließend wurde ein poröser, rohrförmiger Stützkörper, dessen Oberfläche mit Keimkristallen des T-Typs geimpft wurde, in die obige Lösung getaucht. Der Stützkörper bestand aus "Mullite", hergestellt von NIKKATO Co., Ltd, Japan, war 14 cm lang, mit einem äußeren Durchmesser von 1,2 cm, einer Dicke von 1,5 mm, einem Porendurchmessern von 1 µm und einer Porosität von 40 %. Die hydrothermale Synthese wurde unter Atmosphärendruck bei einer Temperatur zwischen 80 und 150 °C für 5 - 156 h, gefolgt von Spülen mit destilliertem Wasser für 6 - 24 Stunden und anschließendem Trocknen durchgeführt. Die gebildeten Zeolithe wurden mittels Röntgenstrukturanalyse untersucht. Die erhaltenen Daten zeigten sehr gute Übereinstimmung mit solchen, die an T-Typ Zeolithen mit 70% Erionit- und 30% Offretitanteil ermittelt wurden. Damit ist nachgewiesen, daß es sich bei der synthetisierten Zeolithschicht um T-Typ-Zeolith handelt. Die Dicke der Zeolithschicht lag in diesen Messungen zwischen 30 - 100 µm. Weiterhin wurden mit den hergestellten Membranen Versuche zur Bestimmung der Trenncharakteristik in einer wie in Fig. 1 dargestellten Anlage durchgeführt.

Die Zulauflösung 1 wird durch die Leitung 3 und den Wärmeaustauscher 4 in die Zelle 2 geführt. In der Zelle 2, versehen mit der oben beschriebenen Membran 5 findet die Trennung des organisch/wäßrigen Gemisches statt. Nach der Trennung verläßt das Retentat die Zelle über Leitung 6 und wird im Retentatsammelbehälter 7 aufgefangen. An der Permeatseite der Membran wird mittels der Vakuumpumpe 8 Unterdruck (0,1 Torr) erzeugt. Der permeierende Dampf wird über Leitung 9 abwechselnd in die Kühlfallen 10 bzw. 11 abgeführt und hier mit flüssigem Stickstoff oder Trockeneis/Alkoholgemischen kondensiert. Die Zelle 2 befindet sich zur gezielten Einstellung der Temperatur in einem Thermostaten 12. Die Zusammensetzung der Lösungen wird mittels Gaschromatographie oder mittels IR-Photometrie bestimmt. Die Leistungsfähigkeit der Membran läßt sich durch den flächenbezogenen Membranfluß [kg/m$^2$h] und durch den Selektivitätsfaktor $\alpha$, der wie folgt definiert ist, beschreiben:

$$\alpha = \frac{X_p^{H_2O} / X_p^{Org}}{X_F^{H_2O} / X_F^{Org}}.$$

Hierbei sind $X_F^{H_2O}$ und $X_F^{Org}$ die Massenanteile in der Feedlösung und $X_p^{H_2O}$ und $X_p^{Org}$ die Massenanteile in der Permeatlösung.

Die Bedingungen der Membranherstellung und die Resultate der Versuche sind nachstehend beschrieben.

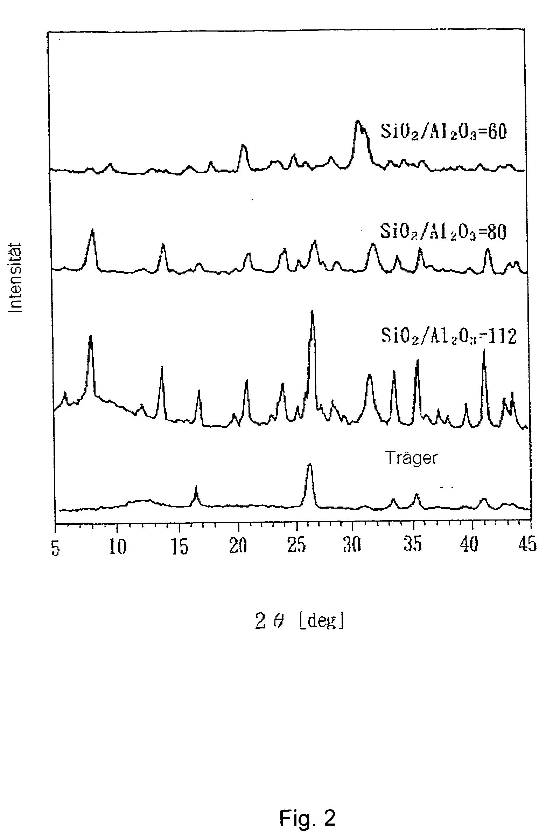

In Fig. 2 sind Ergebnisse der Röntgenstrukturanalyse von T-Typ-Zeolith-Membranen dargestellt. Die Syntheselösung wurde jeweils vor der Synthese 48 Stunden gealtert. Die hydrothermale Synthese wurde bei 100°C und einer Synthesezeit von 24 Stunden unter Variation der Lösungszusammensetzung in Grenzen von SiO/Al$_2$O$_3$ = 60 - 112 erreicht.

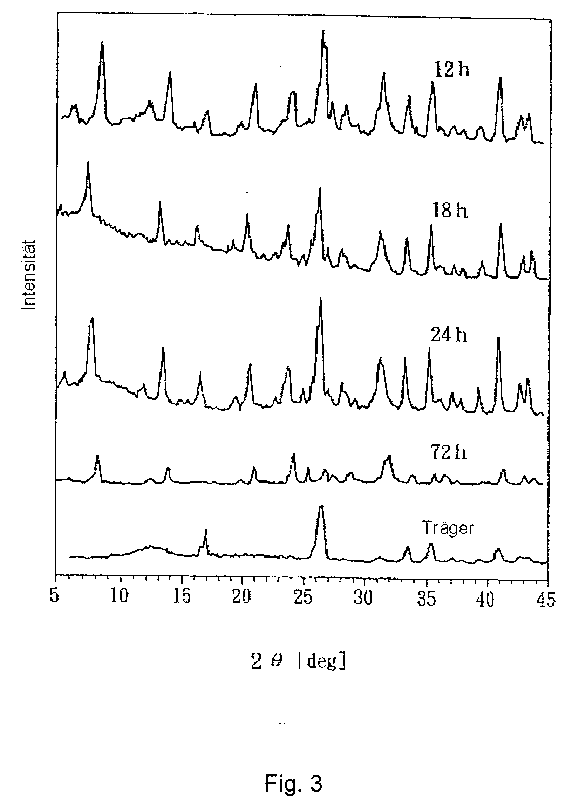

Fig. 3 zeigt die Röntgenstrukturanalyse einer T-Typ Membran, hergestellt mit unterschiedlichen Synthesezeiten. Die Alterungszeit der Lösung betrug wie oben erwähnt 48 Stunden. Dabei lag das SiO$_2$/Al$_2$O$_3$ -Molverhältnis bei 112 und die Temperatur bei 100°C.

Tabelle 1 zeigt die Trennleistungen der T-Typ-Zeolith-Membranen, deren Ergebnisse der Röntgenstrukturanalyse in Fig. 3 dargestellt sind. Die Pervaporationsversuche wurden bei einem Zulauf-Massenverhältnis EtOH/Wasser = 90/10 und einer Zulauf-Temperatur von 75 °C ausgeführt. Q ist der Gesamtfluß über die Membran, Q$_{H2O}$ der Wasserfluß und $\alpha$ die Selektivität der Membran.

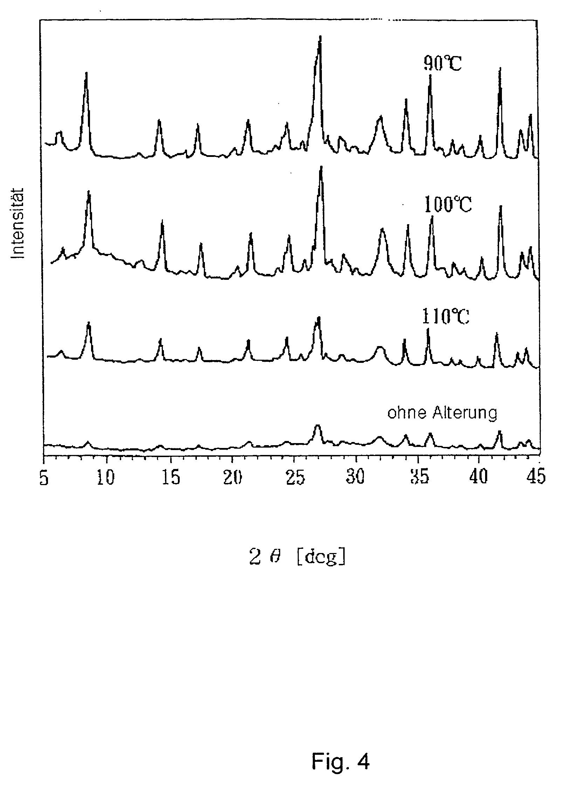

Fig. 4 zeigt die Röntgenstrukturanalysen von T-Typ-Zeolithmembranen, die bei unterschiedlichen Temperaturen und bei konstantem SiO$_2$/Al$_2$O$_3$-Molverhältnis von 112 und konstanter Synthesezeit von 24 Stunden hergestellt wurden (Beispiele 2.1 bis 2.3). Die Alterungszeit der Lösung betrug wie oben erwähnt 48 Stunden. Beispiel 2.4 zeigt das Verhalten eines unbeschichteten Trägers. Im Vergleich zur Synthese mit gealterter Lösung ist in Fig. 4 das Ergebnis der Röntgenstrukturanalyse einer Membran (ohne Alterung) dargestellt, die bei 100°C Synthesetemperatur ohne vorherige Alterung der Lösung hergestellt wurde.

Die Trennleistungen dieser Membranen sind in Tabelle 2 dargestellt. Die entsprechenden Versuche wurden wiederum bei einem Zulauf-Massenverhältnis EtOH/Wasser = 90/10 und einer Zulauf-Temperatur von 75 °C durchgeführt. Damit ist gezeigt, daß mit den in dieser Erfindung beschriebenen Membranen gute Trennergebnisse erreicht werden.

Tabelle 1

| Synthesezeit [h] | Ergebnis der Beschichtung | H$_2$O-Anteil im Permeat [gew.-% H$_2$O] | Gesamtfluß Q [kg/m$^2$h] | H$_2$O - Partialfluß Q$_{H2O}$ [kg/m$^2$h] | EtOH- Partialfluß Q$_{EtOH}$ [kg/m$^2$h] | Selektivität α [-] |
|---|---|---|---|---|---|---|
| 12 | uniform | 63,24 | 0,60 | 0,38 | 0,22 | 14 |
| 18 | uniform | 98,30 | 0,77 | 0,76 | 0,013 | 490 |
| 24 | uniform | 99,80 | 1,25 | 1,25 | 0,0005 | 2200 |
| 72 | nicht uniform | 50,78 | 0,53 | 0,27 | 0,26 | 10 |

Tabelle 2:

| Einfluß der Synthesetemperatur auf die Leistungsfähigkeit der Membran | | | | | | |
|---|---|---|---|---|---|---|
| Bsp. | Synthese- temperatur [°C] | Ergebnis der Beschichtung | H$_2$O-Anteil im Permeat [gew.-% H$_2$O] | Gesamtfluß Q [kg/m$^2$h] | H$_2$O Partialfluß Q$_{H2O}$ [kg/m$^2$h] | EtOHPartialfluß Q$_{EtOH}$ [kg/m$^2$h] | Selektivität α [-] |
| 1.1 | 90 | uniform | 97,90 | 0,93 | 0,91 | 0,02 | 440 |
| 1.2 | 100 | uniform | 99,60 | 1,25 | 1,245 | 0,005 | 2200 |
| 1.3 | 110 | uniform | 96,04 | 0,33 | 0,32 | 0,01 | 210 |
| 1.4 | -- | ohne Beschichtung | | > 10 | | | 1 |

Tabelle 3:

| Vergleich der Eigenschaften der nach Beispiel 2 hergestellten Membranen mit herkömmlichen Zeolith-Membranen (Säurebeständigkeit) | | | | | | | |
|---|---|---|---|---|---|---|---|
| Bsp. | Membrantyp | Behandlung | Temperatur [°C] | Dauer [h] | Gesamtfluß Q [kg/m$^2$h]] | Selektivität α [-] | Bemerkung |
| 2.1 | NaA Typ | ohne | - | - | 1,62 | 10000 | - |
| 2.2 | NaA Typ | HOAc | RT | 100 | | 1 | Zeolithschicht nicht mehr vorhanden |
| 2.3 | NaA Typ | ohne | - | - | 1,80 | 10000 | - |
| 2.4 | NaA Typ | HOAc | RT | 100 | | 1 | Zeolithschicht nicht mehr vorhanden |
| 2.5 | Erionit-Typ | ohne | - | - | 1,0 | 800 | - |
| 2.6 | Erionit-Typ | pH 4 | RT | 100 | 1,4 | 2000 | - |
| 2.7 | Erionit-Typ | ohne | - | - | 1,0 | 800 | - |
| 2.8 | Erionit-Typ | pH 3 | RT | 100 | 1,4 | 3000 | - |
| 2.9 | Erionit-Typ | ohne | - | - | 1,2 | 2000 | - |
| 2.10 | Erionit-Typ | pH 2 | RT | 100 | 0,8 | 700 | - |

**Beispiel 2 (Herstellung und Anwendung):**

Zu einer wäßrigen Lösung bestehend aus Natriumaluminat, Natriumhydroxid und Kaliumhydroxid wird unter Rühren amorphes Silica zugeführt, gerührt und für 48 Stunden altern gelassen. Die Zusammensetzung der Lösung entspricht den folgenden Molverhältnissen:

| | |
|---|---|
| $SiO_2/Al_2O_3$ | 112 |
| $OH^-/SiO_2$ | 0,77, |
| $Na^+/(Na^++K^+)$ | 0,77, |
| $H_2O/(Na^++K^+)$ | 20,75. |

In obige Reaktionsmischung wird anschließend ein poröser rohrförmiger Träger, dessen Oberfläche mit Keimkristallen versehen ist, eingelegt. Bei dem Träger handelt es sich um einen wie in Beispiel 1 beschriebenen Träger. Die Hydrothermalsynthese wird bei 100°C über 24 h durchgeführt, gefolgt von Spülen über 12 h und Trocknen bei 70°C.

An Membranen, die wie oben beschrieben hergestellt wurden, wurde die Säurebeständigkeit der Zeolithschicht durch Säurebehandlung mit Lösungen unterschiedlicher pH-Werte getestet. Die Membranen wurden für 24 Stunden bei Raumtemperatur in verschiedene essigsaure Lösungen mit pH 2, pH 3 und pH 4 eingelegt.

Tabelle 3 zeigt den Vergleich der Leistungsfähigkeit säurebehandelter und unbehandelter Membranen, sowie die herkömmlicher NaA-Zeolithmembranen. Es ist deutlich zu erkennen, daß die Zeolithmembran des NaA-Typs zur Trennung von Ethanol/Wasser-Gemischen in saurer Umgebung nicht geeignet ist. Vor Behandlung in essigsaurer Lösung (pH=4) zeigt die Membran gute Selektivität, nachher ist keine Trennung mehr zu beobachten. Im Gegensatz dazu zeigen die wie oben beschrieben hergestellten T-Typ-Zeolithmembranen keine Leistungseinbuße nach Säurebehandlung.

Diese Ethanol/Wasser-Trennungen an mit Säure behandelten Membranen, stehen repräsentativ für verschiedene Trennungen saurer, organisch/wäßriger Mischungen, wie sie in der Industrie, insbesondere in Kombination mit chemischen Reaktionen, sehr oft vorkommen.

**Beispiel 3 (Anwendung):**

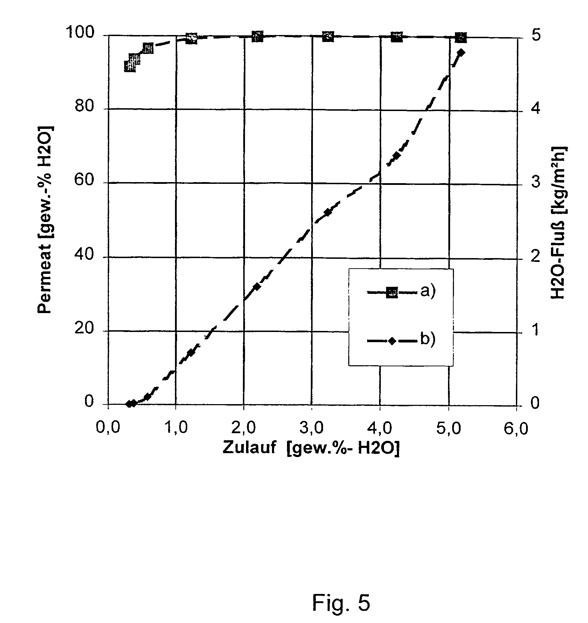

Eine wie in Beispiel 2 beschriebene Membran wurde zur Abtrennung von Wasser aus Phenol bei 80°C eingesetzt. Fig. 5 zeigt die Leistungsfähigkeit der Membran; unterhalb einer Zulaufkonzentration von 1,0 % $H_2O$ betrug der Permeatdruck 5 mbar, oberhalb von 1,0 % $H_2O$ 10 mbar. Die Kurve a) gibt die Wasserkonzentration im Permeat in Abhängigkeit von der Wasserkonzentration des Zulaufs wieder. Kurve b) zeigt den Wasserfluß $Q_{H2O}$ in Abhängigkeit von der Wasserkonzentration im Zulauf. Es ist deutlich zu erkennen, daß hohe Selektivitäts- und Permeatflußwerte erzielt werden können.

**Patentansprüche**

**1.** Membran, zur Trennung von Fluiden, bestehend wenigstens aus einem porösen Träger und einer auf den Träger aufgebrachten Zeolithfilm, **dadurch gekennzeichnet, daß** der Zeolith ein Zeolith des T-Typs oder eines Erionit-Typs ist.

**2.** Membran nach Anspruch 1, **dadurch gekennzeichnet, daß** der poröse Träger einen mittleren Porendurchmesser von 0,05 μm bis 10 μm, bevorzugt von 0,1 μm bis 2 μm, aufweist.

**3.** Membran nach Anspruch 1 oder 2, **dadurch gekennzeichnet, daß** der poröse Träger eine Porosität von 10 % bis 60 %, bevorzugt von 30 % bis 50 %, aufweist.

**4.** Membran nach einem der Ansprüche 1 bis 3, **dadurch gekennzeichnet, daß** der poröse Träger aus Keramik oder Metalloxiden, insbesondere aus Aluminiumoxid, Siliciumdioxid, Zirkoniumoxid, Siliciumnitrid, Siliciumcarbid, oder aus Metall, insbesondere aus Aluminium, Silber oder Edelstahl oder aus organischen Polymeren, Polypropylen, Polyethylen, Polytetrafluorethylen, Polysulfon und Polyimid, besteht.

**5.** Membran nach einem der Ansprüche 1 bis 4, **dadurch gekennzeichnet, daß** der poröse Träger aus Aluminiumoxid mit einem mittleren Porendurchmesser von 0,1 μm bis 2 μm und einer Porosität von 30 % bis 50 % besteht.

**6.** Membran nach einem der Ansprüche 1 bis 5, **dadurch gekennzeichnet, daß** der Erionit-Film durch einen hydrothermalen Prozeß auf dem porösen Träger, wobei als Ausgangssubstanzen wenigstens amorphes Siliciumoxid, Natriumaluminat, Natriumhydroxid und Kaliumhydroxid aufgebaut ist.

**7.** Membran nach einem der Ansprüche 1 bis 6, **dadurch gekennzeichnet, daß** Zeolith-Film eine fehlstellenfreie und reißfreie Schicht auf dem Trägermaterial bildet.

**8.** Membran nach einem der Ansprüche 1 bis 7, **dadurch gekennzeichnet, daß** der Zeolith-Film durch hydrothermale Abscheidung aus Ausgangsverbindungen mit folgenden Molverhältnissen gebildet ist:

| | |
|---|---|
| $SiO_2/Al_2O_3$ | 30 -150, bevorzugt 60 - 130, |
| $OH^-/SiO_2$ | 0,1 - 1, bevorzugt 0,4 - 0,85, |
| $Na^+/(Na^++K^+)$ | 0,1 - 1, bevorzugt 0,4 - 0,85, |
| $H_2O/(Na^++K^+)$ | 10-50, bevorzugt 15 - 40. |

**9.** Membran nach einem der Ansprüche 1 bis 8, **dadurch gekennzeichnet, daß** der Zeolith-Film eine Schichtdicke von 3 bis 100 $\mu m$, bevorzugt von 10 bis 50 $\mu m$ aufweist.

**10.** Verwendung einer Membran nach einem der Ansprüche 1 bis 10 zur Trennung von Fluiden, insbesondere von Mischungen organischer Verbindungen mit Wasser oder gegebenenfalls Wasser enthaltender, Mischungen organischer Verbindungen mittels Pervaporation, Dampfpermeation oder Gaspermeation.

**11.** Verwendung nach Anspruch 10 zur Abtrennung von Wasser aus Mischungen, bestehend aus Wasser und Phenol mittels Pervaporation, Dampfpermeation oder Gaspermeation.

**12.** Verwendung nach Anspruch 10 zur Abtrennung von Wasser aus sauren organisch/wäßrigen Mischungen mittels Pervaporation, Dampfpermeation oder Gaspermeation.

**13.** Verfahren zur Herstellung einer Membran nach einem der Ansprüche 1 bis 9 mit den Schritten

Aufbringen von Impfkristallen, insbesondere bestehend aus T-Typ Zeolith, auf einen porösen Träger oder Mischen des Trägermaterials vor der Fertigung des porösen Trägers mit Impfkristallen, insbesondere bestehend aus T-Typ Zeolith, und Fertigen des Trägers,

Suspendieren von Siliziumdioxid als Pulver oder in kolloidaler Form, von Silikat, insbesondere von Natriumsilikat als Siliziumquellen, von einem Aluminiumsalz oder einem Aluminat als Aluminiumquellen, und von Natrium oder Kaliumionen enthaltenden Verbindungen, insbesondere von Natrium- oder Kaliumhydroxiden als Kationenequellen, in Wasser,

Altern der Suspension über wenigstens eine Stunde bis mehrere Tage,

anschließend Tauchen des mit Impfkristallen behafteten Trägers in die Suspension und Erzeugen der Membran durch hydrothermale Synthese bei einer Temperatur von 60 bis 150°C, bevorzugt von 80 bis 100°C über einen Zeitraum von 1 bis 168 Stunden, bevorzugt von 5 bis 48 Stunden und

Trocknen der fertigen Membran.

**14.** Verfahren nach Anspruch 13, **dadurch gekennzeichnet, daß** die Bestandteile der Suspension folgendes Molverhältnis zueinander aufweisen:

| | |
|---|---|
| $SiO_2/Al_2O_3$ | 112, |
| $OH^-/SiO_2$ | 0,77, |
| $Na^+/(Na^++K^+)$ | 0,77, |
| $H_2O/(Na^++K^+)$ | 20,75. |

**Claims**

1.  Membrane, for the separation of fluids, comprising at least a porous support and a zeolite film applied to the support, **characterized in that** the zeolite is a zeolite of the T type or an erionite type.

2.  Membrane according to Claim 1, **characterized in that** the porous support has a mean pore diameter of from 0.05 µm to 10 µm, preferably from 0.1 µm to 2 µm.

3.  Membrane according to Claim 1 or 2, **characterized in that** the porous support has a porosity of from 10% to 60%, preferably from 30% to 50%.

4.  Membrane according to any of Claims 1 to 3, **characterized in that** the porous support comprises ceramic or metal oxides, in particular aluminium oxide, silicon dioxide, zirconium oxide, silicon nitride, silicon carbide, or metal, in particular aluminium, silver or stainless steel, or organic polymers such as polypropylene, polyethylene, polytetrafluoroethylene, polysulphone and polyimide.

5.  Membrane according to any of Claims 1 to 4, **characterized in that** the porous support comprises aluminium oxide having a mean pore diameter of from 0.1 µm to 2 µm and a porosity of from 30% to 50%.

6.  Membrane according to any of Claims 1 to 5, **characterized in that** the erionite film is deposited on the porous support by means of a hydrothermal process using at least amorphous silicon oxide, sodium aluminate, sodium hydroxide and potassium hydroxide as starting materials.

7.  Membrane according to any of Claims 1 to 6, **characterized in that** the zeolite film forms a defect-free and crack-free layer on the support material.

8.  Membrane according to any of Claims 1 to 7, **characterized in that** the zeolite film is formed by hydrothermal deposition from starting compounds in the following molar ratios:

| | |
|---|---|
| $SiO_2/Al_2O_3$ | 30 - 150, preferably 60 - 130, |
| $OH^-/SiO_2$ | 0.1 - 1, preferably 0.4 - 0.85, |
| $Na^+/(Na^++K^+)$ | 0.1 - 1, preferably 0.4 - 0.85, |
| $H_2O/(Na^++K^+)$ | 10 - 50, preferably 15 - 40. |

9.  Membrane according to any of Claims 1 to 8, **characterized in that** the zeolite film has a thickness of from 3 to 100 µm, preferably from 10 to 50 µm.

10. Use of a membrane according to any of Claims 1 to 10 for the separation of fluids, in particular mixtures of organic compounds with water or mixtures of organic compounds with or without water, by means of pervaporation, vapour permeation or gas permeation.

11. Use according to Claim 10 for the separation of water from mixtures comprising water and phenol by means of pervaporation, vapour permeation or gas permeation.

12. Use according to Claim 10 for the separation of water from acidic organic/aqueous mixtures by means of pervaporation, vapour permeation or gas permeation.

13. Process for producing membrane according to any of Claims 1 to 9, comprising the steps
    applying seed crystals, in particular of T-type zeolite, to a porous support or mixing the support material prior to manufacture of the porous support with seed crystals, in particular crystals of T-type zeolite, and manufacturing the support,
    suspending the silicon dioxide as powder or in colloidal form, silicate, in particular sodium silicate, as silicon sources, an aluminium salt or an aluminate as aluminium sources and compounds containing sodium or potassium ions, in particular sodium or potassium hydroxides, as cation sources in water,
    ageing the suspension for from at least one hour to a number of days,
    subsequently dipping the support to which seed crystals have been applied into the suspension and producing the membrane by hydrothermal synthesis at a temperature of from 60 to 150°C, preferably from 80 to 100°C, over a period of from 1 to 168 hours, preferably from 5 to 48 hours, and
drying the finished membrane.

14. Process according to Claim 13, **characterized in that** the constituents of the suspension have the following molar ratio:

| | |
|---|---|
| $SiO_2/Al_2O_3$ | 112, |
| $OH^-/SiO_2$ | 0.77, |
| $Na^+/(Na^++K^+)$ | 0.77, |
| $H_2O/(Na^++K^+)$ | 20.75. |

## Revendications

1. Membrane, pour la séparation de fluides, constituée d'au moins un support poreux et d'un film zéolite appliqué sur le support, **caractérisée en ce que** la zéolite est une zéolite de type T ou d'un type érionite.

2. Membrane suivant la revendication 1, **caractérisée en ce que** le support poreux a un diamètre moyen de pores de 0,05 à 10 µm, de préférence de 0,1 µm à 2 µm.

3. Membrane suivant la revendication 1 ou 2, **caractérisée en ce que** le support poreux a une porosité de 10 % à 60%, de préférence de 30 % à 50 %.

4. Membrane suivant l'une des revendications 1 à 3, **caractérisée en ce que** le support poreux est constitué de céramique ou d'oxydes métalliques, en particulier d'oxyde d'aluminium, de dioxyde de silicium, d'oxyde de zirconium, de nitrure de silicium, de carbure de silicium, ou d'un métal, en particulier d'aluminium, d'argent ou d'acier inoxydable, ou de polymères organiques, de polypropylène, de polyéthylène, de polytétrafluoroéthylène, de polysulfone et de polyimide.

5. Membrane suivant l'une des revendications 1 à 4, **caractérisée en ce que** le support poreux est constitué d'oxyde d'aluminium d'un diamètre moyen de pores de 0,1 µm à 2 µm et d'une porosité de 30 % à 50 %.

6. Membrane suivant l'une des revendications 1 à 5, **caractérisée en ce que** le film d'érionite est déposé sur le support poreux par un procédé hydrothermique, les substances de départ étant au moins de l'oxyde de silicium amorphe, de l'aluminate de sodium, de l'hydroxyde de sodium et de l'hydroxyde de potassium.

7. Membrane suivant l'une des revendications 1 à 6, **caractérisée en ce que** le film zéolite forme une couche sans défauts et sans fissures sur le matériau de support.

8. Membrane suivant l'une des revendications 1 à 7, **caractérisée en ce que** le film zéolite est formé par précipitation hydrothermique à partir de composés de départ avec les rapports molaires suivants:

| | |
|---|---|
| $SiO_2/Al_2O_3$ | 30 -150, de préférence 60 - 130, |
| $OH^-/SiO_2$ | 0,1 -1, de préférence 0,4 - 0,85, |
| $Na^+/(Na^++K^+)$ | 0,1 - 1, de préférence 0,4 - 0,85, |
| $H_2O/(Na^++K^+)$ | 10 - 50, de préférence 15 - 40. |

9. Membrane suivant l'une des revendications 1 à 8, **caractérisée en ce que** le film zéolite a une épaisseur de couche de 3 à 100 µm, de préférence de 10 à 50 µm.

10. Utilisation d'une membrane suivant l'une des revendications 1 à 10 pour la séparation de fluides, en particulier de mélanges de composés organiques avec l'eau, ou de mélanges de composés organiques, le cas échéant contenant de l'eau, par pervaporation, perméation de vapeur ou perméation de gaz.

11. Utilisation suivant la revendication 10 pour la séparation de l'eau hors de mélanges constitués d'eau et de phénol par pervaporation, perméation de vapeur ou perméation de gaz.

**12.** Utilisation suivant la revendication 10 pour la séparation de l'eau hors de mélanges organiques/aqueux acides par pervaporation, perméation de vapeur ou perméation de gaz.

**13.** Procédé de fabrication d'une membrane suivant l'une des revendications 1 à 9 comprenant les étapes de

application de germes, en particulier constitués de zéolite de type T, sur un support poreux ou mélange du matériau de support avant la fabrication du support poreux avec des germes, en particulier constitués de zéolite de type T, et fabrication du support,

mise en suspension dans l'eau de dioxyde de silicium sous forme de poudre ou sous forme colloïdale, de silicate, en particulier de silicate de sodium, comme sources de silicium, d'un sel d'aluminium ou d'un aluminate comme sources d'aluminium et de composés contenant des ions sodium ou potassium, en particulier d'hydroxydes de sodium ou de potassium, comme sources de cations,

vieillissement de la suspension pendant au moins une heure à plusieurs jours,

ensuite trempage du support enduit de germes dans la suspension et génération de la membrane par synthèse hydrothermique à une température de 60 à 150°C, de préférence de 80 à 100°C, durant une période de 1 à 168 heures, de préférence de 5 à 48 heures et

séchage de la membrane terminée.

**14.** Procédé suivant la revendication 13, **caractérisé en ce que** les composants de la suspension présentent les rapports molaires suivants entre eux:

| | |
|---|---|
| $SiO_2/Al_2O_3$ | 112, |
| $OH^-/SiO_2$ | 0,77, |
| $Na^+/(Na^+ + K^+)$ | 0,77, |
| $H_2O/(Na^+ + K^+)$ | 20,75. |

Fig.1

Fig. 2

Fig. 3

Fig. 4

Fig. 5